# EUROPÄISCHE PATENTANMELDUNG

(11) **EP 2 251 756 A2**
(43) Veröffentlichungstag der Anmeldung: **17.11.2010**
(21) Anmeldenummer: 10161202.6
(22) Anmeldetag: 27.04.2010
(51) Int. Cl.: G05B 23/02

(54) **Verfahren und System zum Testen von Applikationen auf dezentral einsetzbaren programmierbaren Steuergeräten eines Automatisierungssystems**

(30) Priorität: 14.05.2009 DE 102009021385
(71) Anmelder: ABB AG, 68309 Mannheim (DE)
(72) Erfinder: Kantz, Florian, 64646 Heppenheim (DE); Rüdele, Hartmut, 68526 Ladenburg (DE)

(57) **Zusammenfassung**

Die Erfindung betriff ein System und Verfahren zum Testen von Programmen, die in wenigstens einem dezentral einsetzbaren programmierbaren Steuergerät (10) eines Automatisierungssystems abgelegt werden, wobei das Steuergerät (10) mit einer übergeordneten Steuereinheit (20) über einen Feldbus (30) kommuniziert, umfassend folgende Schritte:
- in den zu testenden Programmen wird wenigstens eine Programmvariable als Testvariable (TV1, TV2) gekennzeichnet,
- mittels einer mit der der übergeordneten Steuereinheit zusammenwirkenden Programmierumgebung (40) wird die gekennzeichneten Testvariable (TV1, TV2) bei der Ausführung des Programms identifiziert,
- in einer Gerätebeschreibungsdatei (50) des Steuergerätes (10) wird in der Beschreibung seines Prozessabbildes mittels Prozesswerten (PD1, PD2) auf dem Feldbus (30) ein weiterer Prozesswert (70) für jede gekennzeichnete Testvariable (TV1, TV2) zur Übertragung des Inhaltes der Testvariablen (TV1, TV2) angelegt, und
- das Kommunikationsverhalten des Steuergerätes (10) zur Übertragung des Inhaltes der gekennzeichneten Testvariablen (TV1, TV2) wird dahingehend angepasst, dass die Inhalte der gekennzeichneten Testvariablen (TV1, TV2) in den weiteren neu angelegten Prozesswerten (70) auf dem Feldbus (30) zur übergeordneten Steuereinheit (20) übertragen werden.

## Beschreibung

Die Erfindung betrifft ein Verfahren zum Testen von Programmen in dezentral einsetzbaren programmierbaren Steuergeräten eines Automatisierungssystems gemäß Anspruch 1, wobei die dezentral einsetzbaren programmierbaren Steuergeräte über einen Feldbus mit einer übergeordneten Steuereinheit, beispielsweise einer SPS, und mit weiteren Einheiten, insbesondere Ein/Ausgabeeinheiten und/oder Feldgeräten verbunden werden. Das erfindungsgemäße Verfahren ist insbesondere für den Test von neuen Applikationen für das Automatisierungssystem vorgesehen. Weiterhin betrifft die Erfindung ein System zur Ausführung des Verfahrens.

Dezentrale Automatisierungssysteme, welche insbesondere als SPS-Systeme ausgeführt sind, können dezentral einsetzbare programmierbare Steuereinheiten, im Folgenden auch als Controller bezeichnet, umfassen, die über einen Feldbus mit einer übergeordneten Steuereinheit, Ein-/Ausgabeeinheiten und/oder Feldgeräten des Automatisierungssystems kommunizieren.

Die vorab beschriebenen dezentral einsetzbaren programmierbaren Steuereinheiten weisen jedoch kein Laufzeitsystem als Rahmen für Nutzerapplikationen auf. Dadurch wird zwar eine Verringerung des Bedarfs an Rechenressourcen erreicht und die minimal mögliche Zykluszeit der dezentral einsetzbaren Controller erhöht, jedoch werden durch die sehr engen Randbedingungen an den Ressourcenbedarf des Automatisierungssystems viele sogenannte Komfortfunktionen, die beispielsweise den Test oder die Fehlerbeseitigung neuer Applikationen erleichtern, von der jeweiligen dezentral einsetzbaren programmierbaren Steuereinheit nicht unterstützt. Weiterhin verfügen die üblicherweise als Feldbus-Slave ausgeführten dezentral einsetzbaren Controller über keine weiteren Kommunikationskanäle zum Testen der Applikationen.

Dies führt zu dem Problem, dass der Test neuer Applikationen sehr unübersichtlich werden kann. Da die Kommunikationsbandbreite des Feldbusses begrenzt ist, können nicht alle potentiell interessierenden Daten beim Test einer neuen Applikation über den Bus kommuniziert werden, so dass eine an die jeweilige Aufgabe angepasste sinnvolle Auswahl der über den Feldbus zu übertragenden Daten zu treffen ist. Deshalb ist es erforderlich die getroffene Auswahl in den verschiedenen Einheiten bzw. Komponenten des Automatisierungssystems zeitaufwändig zu konfigurieren und zu programmieren.

Der Erfindung liegt somit die Aufgabe zugrunde, ein Verfahren zum Testen von Programmen, die in dezentral einsetzbaren programmierbaren Steuergeräten eines Automatisierungssystems geladen werden, anzugeben, wodurch vorgenannte Nachteile vermieden werden, und dass insbesondere dafür geeignet ist, den Test neuer Applikationen für das Automatisierungssystem effektiver zu gestalten.

Diese Aufgabe wird erfindungsgemäß durch ein Verfahren zum Testen von Programmen, die in dezentral einsetzbaren programmierbaren Steuergeräten eines Automatisierungssystems geladen werden, mit den im Anspruch 1 angegebenen Merkmalen gelöst. Ein System zur Ausführung des erfindungsgemäßen Verfahrens sowie vorteilhafte Ausgestaltungen und Verbesserungen sind in weiteren Ansprüchen und in der Beschreibung angegeben.

Das erfindungsgemäße Verfahren zum Testen von Programmen, die in dezentral einsetzbaren programmierbaren Steuergeräten abgelegt werden, geht davon aus, dass die dezentral einsetzbaren programmierbaren Steuergeräte über einen Feldbus mit einer übergeordneten Steuereinheit verbunden sind und mit weiteren Einheiten, insbesondere Ein/Ausgabeeinheiten und/oder Feldgeräten verbunden sein können.

Die zu testenden Programme sind vorzugsweise neue Applikationen bzw. Applikationsprogramme für das Automatisierungssystem, die auf die dezentral einsetzbaren programmierbaren Steuergeräte aufgespielt werden und eine Vielzahl an Variablen umfassen. Zum Test der Applikationen kann prinzipiell die Überprüfung des Inhalts jeder dieser Variablen erforderlich werden. Dies wird durch das erfindungsgemäße Verfahren und System ermöglicht.

Die zu testenden Programme werden im zugehörigen Programmiersystem, beispielsweise auf einem Entwicklungs- PC, - meist in einer Hochsprache - erstellt und die zu testende Variablen werden im Programm bzw. der Applikation gekennzeichnet.

Die Programme mit ihren gekennzeichneten Programmvariablen werden in das jeweilige dezentral einsetzbare programmierbare Steuergerät geladen.

Sind die zu testenden Programme in einer textbasierten Programmiersprache erstellt, wird die Kennzeichnung mittels ausgewählter Schlüsselworte ausgeführt.

Liegt das zu testende Programm in einer graphischen Programmiersprache vor, wird die zu testende Programmvariable durch eine Markierung, wie beispielsweise eine farbliche Hervorhebung mittels einer ausgewählten Schriftfarbe, Hintergrundfarbe, Rahmen oder durch ein zusätzliches Symbol gekennzeichnet.

Die dezentral einsetzbaren programmierbaren Steuergeräte werden von der übergeordneten Steuereinheit konfiguriert, wobei die zur Konfiguration verwendeten Parameter in einer Gerätebeschreibungsdatei abgelegt sind.

Der Inhalt der gekennzeichneten Programmvariablen, nunmehr als Testvariable bezeichnet, wird von einem mit der übergeordneten Steuereinheit zusammenwirkenden in einer Programmierumgebung eingebetteten Engineering- Werkzeug während der Ausführung des Programms dargestellt. Als Engineering-Werkzeug wird vorzugsweise ein Programmier- PC eingesetzt.

Auf dem Entwicklungs-PC werden nach der Identifizierung einer Variablen als Testvariable die nachfolgend aufgeführten Schritte des erfindungsgemäßen Verfahrens automatisiert ausgeführt.

In einem ersten Schritt werden in der Gerätebeschreibungsdatei des dezentral einsetzbaren programmierbaren Steuergerätes in der Beschreibung seines Prozessabbildes mittels Prozessdaten, im folgenden auch als Prozesswerte bezeichnet, auf dem Feldbus weitere Prozessdaten zur Übertragung des Inhaltes der Testvariablen angelegt.

In einem weiteren Schritt wird das Kommunikationsverhalten des dezentral einsetzbaren programmierbaren Steuergerätes zur Übertragung des Inhaltes der gekennzeichneten Testvariablen folgendermaßen angepasst. Nach der Anpassung des Prozessabbilds durch die dem dezentral einsetzbaren programmierbaren Steuergerät zugeordneten Beschreibungsdatei wird mittels des dezentral einsetzbaren programmierbaren Steuergerätes der Inhalt der Testvariablen in das Prozessabbild auf dem Feldbus kopiert. Dies kann beispielsweise in einer ersten Ausführungsform des erfindungsgemäßen Verfahrens durch die folgenden Schritte erfolgen:
- Die Größe des internen Datenspeichers des Steuergerätes zur Aufnahme der zu übertragenden Prozesswerte wird entsprechend der Anzahl der für die jeweilige Applikation notwendigen Prozesswerte inklusive der Testvariablen angepasst.
- Der Wert der betreffenden Testvariablen wird zyklisch in den internen Datenspeicher des Steuergerätes zur Aufnahme der zu übertragenden Prozesswerte kopiert.
- Die Routine zur Übertragung der im internen Datenspeicher des Steuergeräts gespeicherten Prozesswerte auf den Feldbus überträgt genau die für diese Applikation notwendige Anzahl an Prozesswerten inklusive der Testvariablen auf den Feldbus.

In einer weiteren Ausführungsform des erfindungsgemäßen Verfahrens wird mittels des dezentral einsetzbaren programmierbaren Steuergerätes der Inhalt der Testvariablen in das Prozessabbild auf dem Feldbus gemäß den folgenden Schritten kopiert:
- Der Routine zur Übertragung der im internen Speicher des Steuergeräts vorhandenen Prozesswerte auf den Feldbus wird die interne Adresse der Testvariablen im Speicherbereich des Steuergeräts kenntlich gemacht.
- Der Routine zur Übertragung der im internen Speicher des Steuergeräts vorhandenen Prozesswerte auf den Feldbus wird die entsprechend vergrößerte Anzahl der auf den Feldbus zu kopierenden Prozesswerte bekannt gemacht.
- Die Routine zur Übertragung der im internen Datenspeicher des Steuergeräts gespeicherten Prozesswerte auf den Feldbus überträgt genau die für diese Applikation notwendige Anzahl an Prozesswerten inklusive der Testvariablen auf den Feldbus.

Der nunmehr neu angelegte weitere Prozesswert kann in einer besonderen Ausgestaltung der Erfindung mit einer neuen Bezeichnung zur einfachen Erkennung der jeweils übertragenen Testvariablen versehen werden.

In einem letzten Schritt kann im Programm der übergeordneten Steuereinheit eine zusätzliche Variable angelegt bzw. erzeugt und mit dem neu angelegten weiteren Prozesswert verknüpft werden. Der neu angelegte Prozesswert überträgt dabei den Inhalt der Testvariablen des dezentral einsetzbaren Steuergeräts über den Feldbus.

Der Name der zusätzlich im Programm der übergeordneten Steuereinheit erzeugten Variable kann eine Kombination aus dem Namen der verknüpften Testvariable und einer eindeutigen Bezeichnung des Steuergeräts, in deren Speicher sich die verknüpfte Testvariable befindet, sein.

Weiterhin kann vorgesehen sein, dass der Name der zusätzlich im Programm der übergeordneten Steuereinheit erzeugten Variable eine Kombination aus dem Namen der verknüpften Testvariable und der Feldbusadresse des dezentral einsetzbaren programmierbaren Steuergeräts, in deren Speicher sich die verknüpfte Testvariable befindet, ist.

Auch kann vorgesehen sein, dass mehrere erzeugte Variable in einem gemeinsamen Kontext visualisiert werden.

Weiterhin wird die gestellte Aufgabe auch durch ein entsprechendes System gelöst, welches zur Ausführung des erfindungsgemäßen Verfahrens vorgesehen ist.

Das System, mit dem die Aufgabe weiterhin gelöst wird, ist dem Anspruch 11 zu entnehmen.

Das erfindungsgemäße System zum Testen von Programmen, die in einem dezentral einsetzbaren programmierbaren Steuergerät eines Automatisierungssystems abgelegt sind, umfasst wenigstens ein dezentral einsetzbares programmierbares Steuergerät, welches über einen Feldbus mit einer übergeordneten Steuereinheit verbunden ist und/oder mit weiteren Einheiten, insbesondere Ein/ Ausgabeeinheiten verbunden sein kann.

In den zu testenden Programmen ist wenigstens eine Programmvariable beispielsweise mittels eines Bezeichners als Testvariable gekennzeichnet. Bei einem in einer textbasierten Programmsprache erstellten Programm ist die Programmvariable mittels ausgewählter Schlüsselworte als Testvariable markiert und bei einem in einer grafischen Programmiersprache erstellten Programm ist die Programmvariable mittels graphischer Markierungen gekennzeichnet.

Mittels einer mit der übergeordneten Steuereinheit zusammenwirkenden Entwicklungs- oder Programmierumgebung ist der Inhalt der gekennzeichneten Testvariable bei der Ausführung des Programms anzeigbar.

Die Software-Entwicklungsumgebung passt das Kommunikationsverhalten des dezentral einsetzbaren programmierbaren Steuergerät zur Übertragung des Inhaltes der gekennzeichneten Testvariablen über den Feldbus zur übergeordneten Steuereinheit an und erzeugt eine Parametrierung weiterer Prozessdaten in der Gerätebeschreibungsdatei des dezentral einsetzbaren programmierbaren Steuergerätes. Somit ist mittels eines automatisch erzeugten Programmcodes und dessen Übertragung auf das Steuergerät eine Anpassung des Kommunikationsverhaltens des Steuergerätes ausführbar. Auch ein bestehender Programmcode ist entsprechend automatisiert konfigurierbar.

Die neu angelegten Prozessdaten, auch als weitere Prozesswerte bezeichnet, des dezentral einsetzbaren programmierbaren Steuergerätes erhalten zur komfortableren Handhabung eine neue Bezeichnung und stehen nunmehr für den Test der auf dem Steuergerät abgelegten Programme bereit.

In einer vorteilhaften Ausführungsform des erfindungsgemäßen Systems ist in der Gerätebeschreibungsdatei des Steuergeräts der neu angelegte weitere Prozesswert mit einer Bezeichnung versehen, die einen Namen der weiteren Testvariablen enthält.

In einer systemgemäßen Ausgestaltung ist vorgesehen, dass das erfindungsgemäße System weitere dezentral einsetzbare programmierbare Controller aufweist, deren Programme mittels der automatisch erzeugten weiteren Prozessdaten effektiv getestet werden können.

Eine weitere Ausgestaltung des erfindungsgemäßen Systems sieht vor, dass im Programm der übergeordneten Steuereinheit Programmcodemittel vorgesehen sind, die eine zusätzliche Variable erzeugen und mit dem neu angelegtem weiteren Prozesswert, der den Inhalt der Testvariablen des Steuergeräts über den Feldbus überträgt, verknüpfen.

Das erfindungsgemäße Verfahren und System sind insbesondere für den Test von neuen Applikationen des Automatisierungssystems vorgesehen und ermöglichen in einfacher Weise eine Modifikation des auf dem dezentral einsetzbaren programmierbaren Steuergeräts befindlichen Programmcodes und seiner Gerätebeschreibungsdatei, um die neue Applikation zu testen.

Weitere Vorteile des beanspruchten Systems ergeben sich aus einer reduzierten Fehleranfälligkeit bei der Konfiguration der Testvariablen und einer vereinfachten Messungen des Zeitverhaltens sowie zusätzlichen Protokollierfunktionen.

Anhand des in der folgenden Figur dargestellten Ausführungsbeispieles sollen die Erfindung sowie vorteilhafte Ausgestaltungen, Verbesserungen und weitere Vorteile der Erfindung näher erläutert und beschrieben werden.

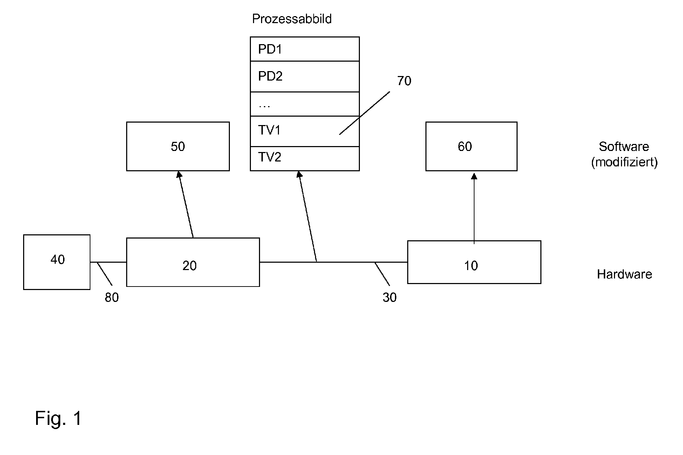

Fig. 1 zeigt eine Ausführungsform eines dezentralen Automatisierungssystems zur Ausführung des erfindungsgemäßen Verfahrens zum Testen von neuen Applikationen.

Das dezentrale Automatisierungssystem umfasst eine übergeordnete Steuereinheit 20, die über einen Feldbus 30 mit wenigstens einem dezentral einsetzbaren programmierbaren Steuergerät 10 und/oder weiteren in Fig. 1 nicht dargestellten Einheiten verbunden ist.

Das dezentral einsetzbare programmierbare Steuergerät 10 wird über den Feldbus 30 von der übergeordneten Steuereinheit 20 konfiguriert, wobei die dafür erforderlichen Parameter in einer Gerätebeschreibungsdatei 50 abgelegt sind.

Nach der Erstellung neuer Applikationen für das Automatisierungssystem müssen diese auf dem dezentral einsetzbaren programmierbaren Steuergerät 10 getestet werden. Der Verfahrensablauf zum Test der neu auf das Automatisierungssystem aufgespielten Applikationen wird gemäß den nachfolgend beschriebenen Verfahrensschritten ausgeführt.

In einem ersten Schritt wird die in der Programmierumgebung 40, vorzugsweise auf einem Programmier- PC 40, neu erstellte und nunmehr zu testende Applikation mit den als Testvariablen TV1, TV2 gekennzeichneten Programmvariablen V1, V2 der Applikation übersetzt. Dabei wird automatisch ein Programmcode 60 zur Übertragung des Inhaltes der identifizierten Testvariablen TV1, TV2 erzeugt.

Die Testvariablen TV1, TV2 die ursprünglich durch den Programmierer der Applikation für das Steuergerät 10 in dem zugehörigen Programmiersystem gekennzeichnet wurden, werden mit der zu testenden Applikation in das jeweilige dezentral einsetzbare programmierbare Steuergerät 10 geladen. Die Identifikation der Testvariablen TV1, TV2 zur Anzeige findet dann in der mit der Steuereinheit 10 zusammenwirkenden Programmierumgebung 40 statt.

Die Identifikation der Testvariablen TV1, TV2 in der Programmierumgebung 40 erfolgt spezifisch gemäß der durch den jeweils verwendeten Feldbus 30 bereitgestellten Möglichkeiten. Dies kann beispielsweise anhand der durch einen Bezeichner der den Testvariablen TV1, TV2 zugeordneten Prozesswerte 70 stattfinden. Die Prozesswerte 70 werden spezifisch für die jeweilige Applikation erzeugt und ihre Bezeichner können dementsprechend derart gewählt werden, dass ihre Identifizierung als Testvariablen TV1, TV2 in der Programmierumgebung 40 gewährleistet ist. Eine weitere Möglichkeit zur Identifikation der Testvariablen TV1, TV2 ist die Nutzung speziellen Adressen der den Testvariablen TV1, TV2 zugeordneten Prozesswerte 70.

Nunmehr wird mittels des erzeugten Programmcodes 60 im Steuergerät 10 und in der Gerätebeschreibungsdatei 50 der übergeordneten Steuereinheit 20 eine Parametrierung weiterer Prozessdaten 70 zusätzlich zu den bestehenden Prozessdaten PD1, PD2, ... auf dem Feldbus ausgeführt.

Die weiteren neu angelegten Prozessdaten 70 werden mit einer neuen Bezeichnung versehen und stehen für den Test der auf dem Steuergerät 10 abgelegten Programme durch ein Überprüfen der Werte der übertragenen Testvariablen entsprechend den Grundsätzen des allgemeinen Softwaretests bereit.

Bei der Ausführung der Applikation auf dem dezentralen Steuergerät 10 wird die zuvor gekennzeichnete Testvariable TV1, TV2 erkannt und an die übergeordnete Steuereinheit 20 übermittelt und von dort an die mit dieser zusammenwirkenden als Programmier- PC ausgeführten Programmierumgebung 40 über eine Programmierschnittstelle 80 übermittelt.

## Patentansprüche

1. Verfahren zum Testen von Programmen, die in wenigstens einem dezentral einsetzbaren programmierbaren Steuergerät (10) eines Automatisierungssystems geladen werden, wobei das Steuergerät (10) mit einer übergeordneten Steuereinheit (20) über einen Feldbus (30) kommuniziert, umfassend folgende Schritte:
- in den zu testenden Programmen, die in einer mit der übergeordneten Steuereinheit zusammenwirkenden Programmierumgebung (40) abgelegt sind, wird wenigstens eine Programmvariable als Testvariable (TV1, TV2) **gekennzeichnet**,
- mittels der mit der übergeordneten Steuereinheit zusammenwirkenden Programmierumgebung (40) wird die **gekennzeichnet**en Testvariable (TV1, TV2) bei der Ausführung des Programms gemäß der durch den verwendeten Feldbus (30) bereitgestellten Möglichkeiten identifiziert,
- in einer Gerätebeschreibungsdatei (50) des Steuergerätes (10) wird in der Beschreibung seines Prozessabbildes mittels Prozesswerten (PD1, PD2) auf dem Feldbus (30) jeweils ein weiterer Prozesswert (70) für jede **gekennzeichnet**e Testvariable (TV1, TV2) zur Übertragung des Inhaltes der Testvariablen (TV1, TV2) angelegt,
- nach der Anpassung des Prozessabbilds durch die dem Steuergerät (10) zugeordnete Gerätebeschreibungsdatei (50) wird mittels des Steuergerätes (10) der Inhalt der Testvariablen (TV1, TV2) in das Prozessabbild auf dem Feldbus (30) kopiert und damit das Kommunikationsverhalten des Steuergerätes (10) zur Übertragung des Inhaltes der **gekennzeichnet**en Testvariablen (TV1, TV2) dahingehend angepasst, dass die Inhalte der **gekennzeichnet**en Testvariablen (TV1, TV2) in den weiteren neu angelegten weiteren Prozesswerten (70) auf dem Feldbus (30) zur übergeordneten Steuereinheit (20) übertragen werden.

2. Verfahren nach Anspruch 1, **dadurch gekennzeichnet, dass** die Identifizierung der der Testvariablen (TV1, TV2) in der Programmierumgebung (40) mittels eines jeweils vorgesehenen Bezeichner ausgeführt wird, der den den Testvariablen (TV1, TV2) zugeordneten Prozesswerte (70) zugeordnet wird.

3. Verfahren nach Anspruch 1, **dadurch gekennzeichnet, dass** die Identifizierung der der Testvariablen (TV1, TV2) in der Programmierumgebung (40) mittels einer Nutzung spezieller Adressen der den Testvariablen (TV1, TV2) zugeordneten Prozesswerte (70) ausgeführt wird.

4. Verfahren nach Anspruch 1 oder 2, **dadurch gekennzeichnet, dass** die Programmvariable in dem in einer textbasierten Programmsprache erstellten Programm mittels ausgewählter Schlüsselworte als Testvariable (TV1, TV2) oder die Programmvariable in dem in einer grafischen Programmsprache erstellten Programm mittels graphischer Markierungen als Testvariable (TV1, TV2) **gekennzeichnet** wird.

5. Verfahren nach einem der vorherigen Ansprüche, **dadurch gekennzeichnet, dass** in der Gerätebeschreibungsdatei (50) des Steuergeräts (10) zur Übertragung des Inhalts der Testvariablen (TV1, TV2) der angelegte weitere Prozesswert (70) mit einer Bezeichnung versehen wird, die einen Namen einer verknüpften Testvariable enthält.

6. Verfahren nach einem der vorherigen Ansprüche, **dadurch gekennzeichnet, dass** zur Anpassung des Kommunikationsverhaltens des Steuergerätes (10) ein ausführbarer Programmcode (60) automatisiert erzeugt und auf das Steuergerät (10) geladen wird.

7. Verfahren nach Anspruch 1 bis 5, **dadurch gekennzeichnet, dass** zur Anpassung des Kommunikationsverhaltens des Steuergerätes (10) ein bestehender Programmcode (60) entsprechend automatisiert konfiguriert wird.

8. Verfahren nach einem der vorherigen Ansprüche, **dadurch gekennzeichnet, dass** im Programm der übergeordneten Steuereinheit (20) eine zusätzliche Variable erzeugt wird, und mit dem neu angelegtem weiteren Prozesswert (70), der den Inhalt der Testvariablen des Steuergeräts (10) über den Feldbus (30) überträgt, verknüpft wird.

9. Verfahren nach Anspruch 8, **dadurch gekennzeichnet, dass** der Name der zusätzlich im Programm der übergeordneten Steuereinheit (20) erzeugten Variable eine Kombination aus dem Namen der verknüpften Testvariable und einer eindeutigen Bezeichnung des Steuergeräts (10), in deren Speicher sich die verknüpfte Testvariable befindet, enthält.

10. Verfahren nach Anspruch 8, **dadurch gekennzeichnet, dass** der Name der zusätzlich im Programm der übergeordneten Steuereinheit (20) erzeugten Variable eine Kombination aus dem Namen der verknüpften Testvariable (TV1, TV2) und der Feldbusadresse des dezentral einsetzbaren programmierbaren Steuergeräts (10), in deren Speicher sich die verknüpfte Testvariable (TV1, TV2) befindet, enthält.

11. Verfahren nach einem der vorherigen Ansprüche, **dadurch gekennzeichnet, dass** mehrere erzeugte Variable (TV1, TV2) in einem gemeinsamen Kontext visualisiert werden.

12. System zum Testen von Programmen, die in wenigstens einem dezentral einsetzbaren programmierbaren Steuergerät (10) eines Automatisierungssystems abgelegt sind, wobei das Steuergerät (10) mit einer übergeordneten Steuereinheit (20) über einen Feldbus (30) kommuniziert, **dadurch gekennzeichnet, dass**
- in den zu testenden Programmen wenigstens eine Programmvariable als Testvariable (TV1, TV2) **gekennzeichnet** ist,
- eine mit der übergeordneten Steuereinheit (20) zusammenwirkenden Programmierumgebung (40) die **gekennzeichnet**en Testvariable (TV1, TV2) bei der Ausführung des Programms gemäß der durch den verwendeten Feldbus (30) bereitgestellten Möglichkeiten identifiziert, in der Gerätebeschreibungsdatei (50) des Steuergerätes (10) eine Beschreibung des Prozessabbildes des Steuergerätes (10) mittels Prozesswerten (PD1, PD2) abgelegt ist und dort jeweils ein weiterer Prozesswert (70) für jede **gekennzeichnet**e Testvariable (TV1, TV2) zur Übertragung des Inhaltes der Testvariablen (TV1, TV2) anlegbar ist,
- das Steuergerät (10) nach der Anpassung des Prozessabbilds durch die dem Steuergerät (10) zugeordnete Gerätebeschreibungsdatei (50) der Inhalt der Testvariablen (TV1, TV2) in das Prozessabbild auf dem Feldbus (30) kopiert und damit das Kommunikationsverhalten des Steuergerätes (10) zur Übertragung des Inhaltes der **gekennzeichnet**en Testvariablen (TV1, TV2) so anpassbar ist, dass die Inhalte der **gekennzeichnet**en Testvariablen (TV1, TV2) in den weiteren neu angelegten weiteren Prozesswerten (70) auf dem Feldbus (30) zur übergeordneten Steuereinheit (20) übertragbar sind.

13. System nach Anspruch 12, **dadurch gekennzeichnet, dass** die Programmvariable in dem in einer textbasierten Programmsprache erstellten Programm mittels ausgewählter Schlüsselworte als Testvariable (TV1, TV2) oder die Programmvariable in dem in einer grafischen Programmsprache erstellten Programm mittels graphischer Markierungen als Testvariable (TV1, TV2) markiert ist.

14. System nach einem der Ansprüche 12 bis 13, **dadurch gekennzeichnet, dass** in der Gerätebeschreibungsdatei (50) des Steuergeräts (10) zur Übertragung des Inhalts der Testvariablen (TV1, TV2) der angelegte weitere Prozesswert (70) mit einer Bezeichnung versehen ist, die einen Namen der weiteren Testvariable enthält.

15. System einem der Ansprüche 12 bis 14, **dadurch gekennzeichnet, dass** mittels eines automatisch erzeugten Programmcodes (60) und dessen Übertragung auf das Steuergerät (10) eine Anpassung des Kommunikationsverhaltens des Steuergerätes (10) ausführbar ist.

16. System nach einem der Ansprüche 12 bis 15, **dadurch gekennzeichnet, dass** zur Anpassung des Kommunikationsverhaltens des Steuergerätes (10) ein bestehender Programmcode (60) entsprechend automatisiert konfigurierbar ist.

17. System nach einem der Ansprüche 12 bis 16, **dadurch gekennzeichnet, dass** im Programm der übergeordneten Steuereinheit (20) Programmcodemittel vorgesehen sind, die eine zusätzliche Variable erzeugen und mit dem neu angelegtem weiteren Prozesswert (70), der den Inhalt der Testvariablen (TV1, TV2) des Steuergeräts (10) über den Feldbus (30) überträgt, verknüpfen.

18. System Anspruch 17, **dadurch gekennzeichnet, dass** der Name der zusätzlich im Programm der übergeordneten Steuereinheit (20) erzeugten Variable eine Kombination aus dem Namen der verknüpften Testvariable und einer eindeutigen Bezeichnung des Steuergeräts (10), in deren Speicher sich die verknüpfte Testvariable befindet, ist.

19. System nach Anspruch 17, **dadurch gekennzeichnet, dass** der Name der zusätzlich im Programm der übergeordneten Steuereinheit (20) erzeugten Variable eine Kombination aus dem Namen der verknüpften Testvariable und der Feldbusadresse des dezentral einsetzbaren programmierbaren Steuergeräts (10), in deren Speicher sich die verknüpfte Testvariable befindet, ist.

20. System nach einem der Ansprüche 12 bis 19, **dadurch gekennzeichnet, dass** ein gemeinsamer Kontext mehrere erzeugte Variable visualisiert.

21. Verwendung des Verfahren und Systems nach einem der vorherigen Ansprüche für den Test von neuen Applikationen des Automatisierungssystems.
